# EUROPEAN PATENT SPECIFICATION

(11) **EP 2 902 283 B1**
(45) Date of publication and mention of the grant of the patent: **12.04.2017**
(21) Application number: 13841373.7
(22) Date of filing: 19.09.2013
(51) Int. Cl.: B60T 15/08, B60T 8/34

(54) **ABS HYDRAULIC UNIT**
ABS-HYDRAULIKAGGREGAT
UNITÉ HYDRAULIQUE D'ABS

(30) Priority: 28.09.2012 JP 2012216280
(43) Date of publication of application: 05.08.2015
(73) Proprietor: ROBERT BOSCH GMBH, 70442 Stuttgart (DE)
(72) Inventor: SAGAYAMA, Kosaku, Yokohama-shi Kanagawa 224-8501 (JP)
(74) Representative: Bee, Joachim
(86) International application number: PCT/JP2013/075289
(87) International publication number: WO 2014/050693

(56) References cited:
- EP-A1- 0 449 320
- EP-A2- 2 008 895
- EP-A2- 2 060 458
- DE-A1- 19 621 230
- JP-A- H09 158 814
- JP-A- 2006 007 819
- JP-A- 2007 168 456
- JP-A- 2007 269 171

## Description

### Technical Field

The present invention relates to an ABS hydraulic unit where a pump, a closing valve and a release valve are disposed in a hydraulic circuit for applying braking to a hydraulic brake using a brake fluid discharged from a master cylinder, wherein the ABS hydraulic unit performs an antilock brake control of the hydraulic brake by controlling the pump, the closing valve and the release valve.

### Background Art

Conventionally, there has been known an ABS hydraulic unit where a pump, a closing valve and a release valve are disposed in a hydraulic circuit for applying braking to a hydraulic brake using a brake fluid discharged from a master cylinder, wherein the ABS hydraulic unit performs an antilock brake control of the hydraulic brake by controlling the pump, the closing valve and the release valve (see Patent Literature 1, for example). In this type of ABS hydraulic unit, in performing an antilock brake control, a brake fluid in a flow passage between the master cylinder and the hydraulic brake is released to an accumulator by opening the release valve, and the brake fluid is discharged into the flow passage between the master cylinder and the hydraulic brake by operation of the pump.

Furthermore, there has been known a brake hydraulic controller for a vehicle comprising solenoid valves for opening/closing a flow passage which is formed in a base body; a reservoir for temporarily storing the brake liquid flowing out from a wheel cylinder; a pump for returning the brake liquid stored in the reservoir to a master cylinder side; a motor having a rotation shaft and a rotor and becoming a power source of the pump; and a housing covering the solenoid valves and the motor. The solenoid valves, the motor and the housing are assembled to one surface side of the base body and the solenoid valves are arranged on a periphery of the motor (see Patent Literature 2).

Moreover, there has been known a vehicle brake hydraulic pressure control unit comprising: a base body which has a front surface and a back surface; solenoid valves mounted to the base body; pumps incorporated in the base body; a control unit which controls the solenoid valves; a control housing which is provided on the front surface of the base body and encircles the solenoid valves and the control unit and a motor which is provided on the back surface of the base body and drives the pumps incorporated in the base body, wherein a flange having a motor mounting through hole is provided on the motor, a motor mounting hole is provided on the base body, a motor mounting screw is passed through the motor mounting through hole of the motor from the back surface side so as to be screwed into the motor mounting hole of the base body to fix the motor to the base body, a housing mounting hole is provided on the control housing, a housing mounting through hole is formed on the base body in such a manner as to be offset from a portion which is in abutment with the flange of the motor, and a housing mounting screw is passed through the housing mounting through hole of the base body from the back surface side so as to be screwed into the housing mounting hole of the control housing to fix the control housing to the base body (see Patent Literature 3).

### Citation List

### Patent Literature

PTL 1: JP-A-2002-370635
PTL 2: JP 2007 168456 A
PTL 3: EP 2 008 895 A2

### Summary of Invention

### Technical Problem

However, in the above-mentioned ABS hydraulic unit pertaining to the related art, a block in which a hydraulic circuit is formed is configured such that a rotary shaft of a motor mounted on the ABS hydraulic unit is positioned approximately at the center of the block. Accordingly, in the hydraulic circuit, the arrangement of the pump, a pipe, the closing valve and the release valve is decided by positioning the rotary shaft of the motor at the center of the arrangement. Accordingly, for example, the pump is arranged between the closing valve and the release valve and hence, the accumulator or the like which is connected between the release valve and the pump is connected by a pipe routed around a long distance. When the pipe in the hydraulic circuit is long, a use amount of a brake fluid used in the ABS hydraulic circuit is increased. Further, the block becomes large and hence, the ABS hydraulic unit becomes large and heavy. Further, in manufacturing steps of such an ABS hydraulic unit, it is necessary to apply working to the block from various directions and to form pipes which are routed around in a complicated manner and hence, working of the block is difficult.

It is an object of the invention to provide an ABS hydraulic unit which can overcome the above-mentioned drawbacks that the related art has, can reduce a use amount of a brake fluid, can realize space saving and the reduction of weight, and can provide easy working in manufacturing steps.

### Solution to Problem

The present invention provides an ABS hydraulic unit according to claim 1.

The invention is directed to an ABS hydraulic unit where a hydraulic circuit is connected to a master cylinder for discharging a brake fluid at a first connection end thereof and is connected to a hydraulic brake at a second connection end thereof, and makes the hydraulic brake perform braking, a pump operated by a motor, an inlet valve, an outlet valve and an accumulator are provided in the hydraulic circuit, and an antilock brake control of the hydraulic brake is performed by controlling the pump, the inlet valve and the outlet valve, wherein the ABS hydraulic unit has a circuit part in which the hydraulic circuit is disposed, the circuit part includes: a discharge side passage where the pump is disposed at one end of the discharge side passage in a longitudinal direction and the first connection end is formed on the other end of the discharge side passage in the longitudinal direction, and connects a discharge side of the pump and the first connection end to each other; and a suction side passage which extends along the discharge side passage and connects a suction side of the pump and the inlet valve to each other, and the accumulator, the outlet valve, the second connection end and the inlet valve are arranged in the suction side passage in order from the one end to the other end.

In this case, the longitudinal direction may be the axial direction of the motor. The circuit part may be configured such that the discharge side passage and the suction side passage are formed approximately parallel to an axis of the motor. The circuit part may be configured such that the discharge side passage has a larger diameter than the suction side passage. The circuit part may be configured such that the first connection end, the second connection end and the accumulator are disposed on the same plane. A direction along which the inlet valve and the outlet valve are incorporated into the circuit part and the axial direction of the motor are set approximately orthogonal to each other. The motor may be configured to operate the pump by way of a planetary gear mechanism.

### Advantageous Effects of Invention

According to the invention, it is possible to realize an ABS hydraulic unit which can reduce a use amount of a brake fluid, can realize space saving and the reduction of weight, and can provide easy working in manufacturing steps.

### Brief Description of Drawings

[Fig. 1] Fig. 1 is a circuit diagram showing a hydraulic circuit of an ABS hydraulic unit according to this embodiment.
[Fig. 2] Fig. 2 is a block diagram showing the functional constitution of an ECU.
[Fig. 3] Fig. 3 is a perspective view showing the ABS hydraulic unit.
[Fig. 4] Fig. 4 is a perspective view showing a state where the ECU is removed from the ABS hydraulic unit.
[Fig. 5] Fig. 5 is an exploded perspective view showing the ABS hydraulic unit.
[Fig. 6] Fig. 6 is a cross-sectional view showing the ABS hydraulic unit.
[Fig. 7] Fig. 7 is an exploded perspective view showing a planetary gear mechanism.
[Fig. 8] Fig. 8 is a perspective view as viewed from a pipe connecting surface side where a unit body is schematically described.
[Fig. 9] Fig. 9 is a perspective view as viewed from a back surface side of the pipe connecting surface where the unit body is schematically described.

### Description of Embodiments

Hereinafter, one preferred embodiment of the invention is explained with reference to drawings.

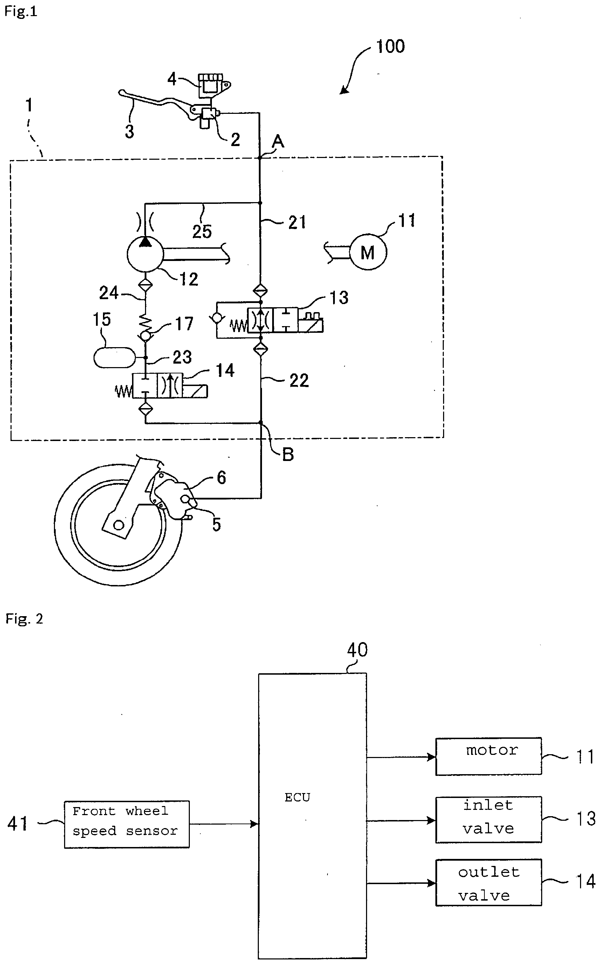

Fig. 1 is a circuit diagram showing a hydraulic circuit of an ABS hydraulic unit according to this embodiment. In a motorcycle according to this embodiment, an ABS (anti-lock braking system) is mounted only on a front wheel so that the ABS hydraulic unit 100 can perform an antilock brake control only with respect to the front wheel. Hereinafter, a hydraulic circuit 1 for the front wheel is explained.

The hydraulic circuit 1 is filled with a brake fluid, and is connected to a master cylinder 2 at a first connection end A thereof. A brake lever 3 is mounted on the master cylinder 2, and the master cylinder 2 is connected to a reservoir 4. Due to such a constitution, when a rider manipulates the brake lever 3 so as to apply braking to the front wheel, the master cylinder 2 discharges a brake fluid accumulated in the reservoir 4 into the hydraulic circuit 1.

On the other hand, the hydraulic circuit 1 is connected to a wheel cylinder 5 at a second connection end B thereof. The wheel cylinder 5 is mounted in a brake caliper 6 of the front wheel. The brake caliper 6 is operated along with the increase of a fluid pressure in the wheel cylinder 5 and applies a braking force to the front wheel.

The hydraulic circuit 1 connected between the master cylinder 2 and the wheel cylinder 5 includes: a motor 11; a pump 12; a closing valve 13; a release valve 14; and an accumulator 15.

The closing valve 13 is an electromagnetic valve provided with a solenoid. The closing valve 13 is connected to the first connection end A through a first pipe 21, and is also connected to the second connection end B and the release valve 14 through a second pipe 22. The second pipe 22 is bifurcated in the middle thereof and hence, the second pipe 22 is connected to the closing valve 13, the second connection end B, and the release valve 14. The closing valve 13 is connected to the first pipe 21 and the second pipe 22 by way of a filter respectively. A check valve is connected parallel to the closing valve 13 between two filters. The check valve does not allow the flow of a brake fluid from the first pipe 21 into the second pipe 22 but allows the flow of a brake fluid from the second pipe 22 into the first pipe 21 even when the closing valve 13 is closed. The closing valve 13 is provided for controlling the flow of a brake fluid from the first pipe 21 to the second pipe 22 due to opening or closing of the closing valve 13.

The release valve 14 is an electromagnetic valve provided with a solenoid. The release valve 14 is connected to the closing valve 13 and the second connection end B through the second pipe 22, and is connected to the accumulator 15 through a third pipe 23. The release valve 14 is connected to the second pipe 22 by way of a filter. The release valve 14 is provided for controlling the flow of a brake fluid from the second pipe 22 into the third pipe 23 due to opening or closing of the release valve 14.

The accumulator 15 is connected to the release valve 14 through the third pipe 23, and is connected to a suction side of the pump 12 through a fourth pipe 24. The accumulator 15 is connected to the fourth pipe 24 by way of a check valve 17. Due to the provision of the check valve 17, when a fluid pressure of a brake fluid exceeds a predetermined pressure, it is always the case that the brake fluid can flow from the accumulator 15 into the fourth pipe 24 but cannot flow from the fourth pipe 24 into the accumulator 15. The accumulator 15 is provided for accumulating a brake fluid which flows into the accumulator 15 from the third pipe 23, and to discharge an accumulated brake fluid into the fourth pipe 24.

The pump 12 is connected to the accumulator 15 through the fourth pipe 24, and is connected to the first pipe 21 through a fifth pipe 25. The pump 12 is connected to the fourth pipe 24 by way of a filter, and is connected to the fifth pipe 25 by way of a throttle. The pump 12 is operated when the motor 11 which is a DC motor is driven, and sucks a brake fluid from the fourth pipe 24 disposed at a suction side, and discharges the sucked brake fluid into the fifth pipe 25 disposed at a discharge side.

Fig. 2 is a block diagram showing the functional constitution of the ECU.

The ECU 40 controls the driving of the motor 11, an opening state or a closing state of the closing valve 13, an opening state or a closing state of the release valve 14 and the like based on a rotational speed signal which the ECU 40 receives from a speed sensor 41 for detecting a rotational speed signal. The rotational speed signal corresponds to a rotational speed of the front wheel.

In a usual braking state, the ECU 40 stops the driving of the motor 11 so that the closing valve 13 is held in an open state and the release valve 14 is held in a closed state. Due to such an operation, when a rider manipulates the brake lever 3 so that a pressure of a brake fluid is increased by the master cylinder 2 (see Fig. 1), the increase of the pressure of the brake fluid is transmitted to the wheel cylinder 5 (see Fig. 1) through the first pipe 21, the closing valve 13, and the second pipe (see Fig. 1). Accordingly, the brake caliper 6 (see Fig. 1) is operated in an interlocking manner with the manipulation of the brake lever 3 (see Fig. 1) by the rider so that a braking force is applied to the front wheel.

At the time of performing braking where a braking force is generated by the brake caliper 6, the ECU 40 repeatedly determines whether or not the front wheel is in a locked state, that is, whether or not the front wheel excessively slips on a road surface based on a rotational speed signal acquired from the speed sensor 41. When the ECU 40 determines that the front wheel is in a locked state, the ECU 40 closes the closing valve 13, opens the release valve 14, and operates the pump 12 by driving the motor 11 thus performing a control so as to lower a fluid pressure of a brake fluid transmitted to the wheel cylinder 5 by opening or closing the closing valve 13 and the release valve 14. Due to such an operation, the ECU 40 controls a braking force of the brake caliper 6 by an antilock brake control thus releasing a locked state of the front wheel.

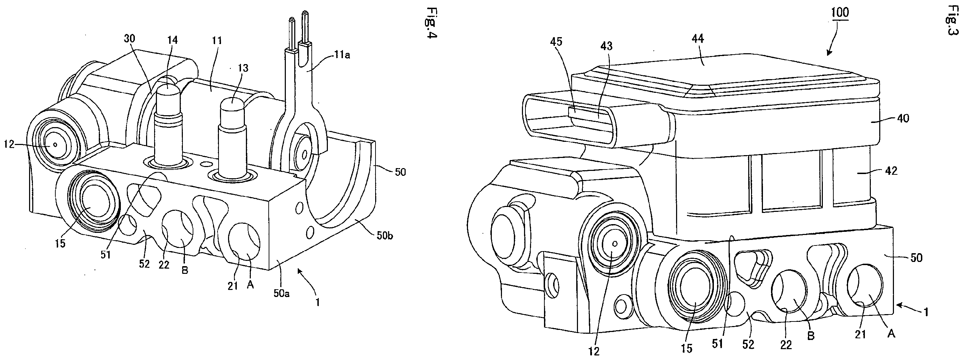

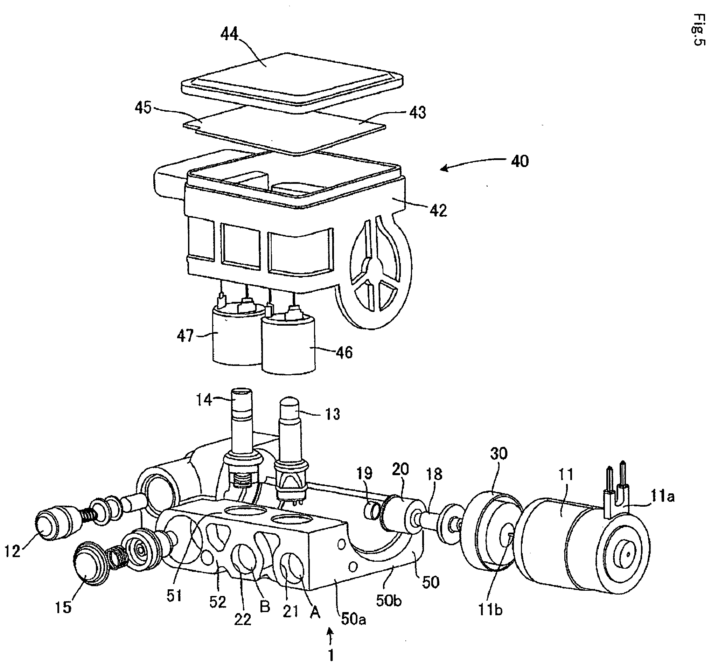

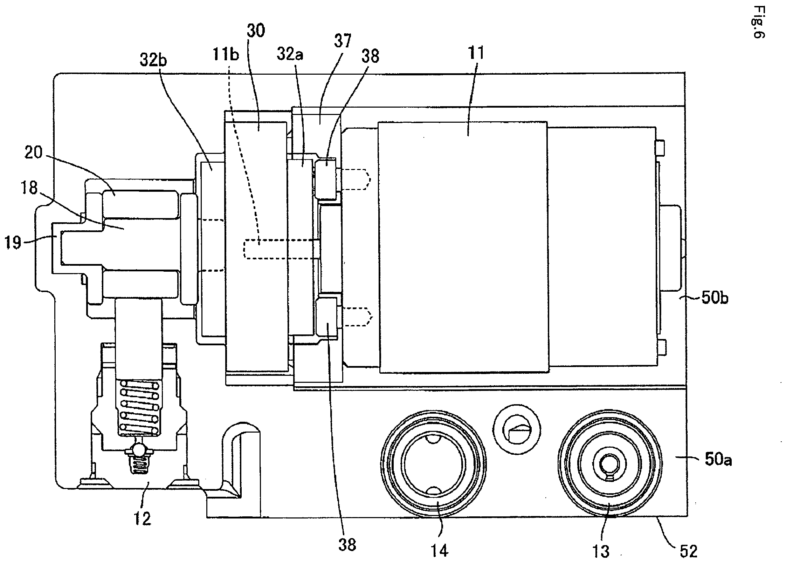

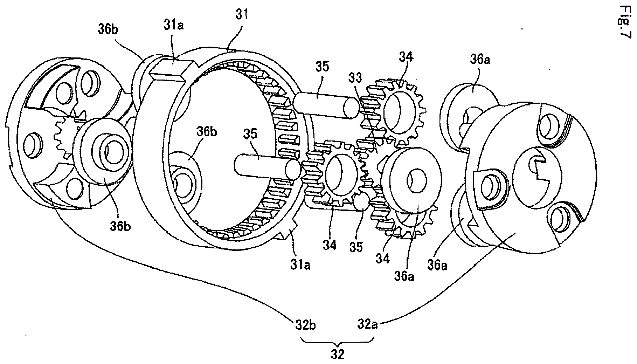

Hereinafter, the ABS hydraulic unit according to this embodiment is explained. Fig. 3 is a perspective view showing the ABS hydraulic unit, Fig. 4 is a perspective view showing a state where the ECU is removed from the ABS hydraulic unit, Fig. 5 is an exploded perspective view showing the ABS hydraulic unit, Fig. 6 is a cross-sectional view showing the ABS hydraulic unit, and Fig. 7 is an exploded perspective view showing a planetary gear mechanism.

As shown in Fig. 3, the ABS hydraulic unit is constituted by combining the ECU 40 and a unit body 50 to each other.

The unit body 50 is made of aluminum, and the hydraulic circuit 1 is formed in the inside of the unit body 50. In the unit body 50, on a pipe connecting surface 52 approximately orthogonal to an ECU mounting surface 51 on which the ECU 40 is mounted, the first connection end A and the second connection end B are formed. The pump 12 and the accumulator 15 are also mounted on the pipe connecting surface 52.

The ECU 40 is mounted on the ECU mounting surface 51 of the unit body 50, and a printed circuit board 43 is assembled into the inside of a case 42. In a state where the ECU 40 is mounted on the unit body 50, a connector 45 of the printed circuit board 43 projects toward a pump 12 side.

As shown in Fig. 4, the ABS hydraulic unit 100 is configured such that the motor 11, the closing valve 13 and the release valve 14 are exposed when the ECU 40 is removed from the unit body 50.

As shown in Fig. 5, the unit body 50 has a circuit part 50a in which the hydraulic circuit 1 is disposed, and an arrangement part 50b on which the motor 11 and a planetary gear mechanism 30 are arranged. The circuit part 50a is formed in an approximately rectangular shape having a longitudinal direction thereof directed in the axial direction of the motor 11. The pipe connecting surface 52 is formed along the longitudinal direction of the circuit part 50a. On the other hand, the arrangement part 50b is formed in an approximately rectangular shape where a region of the arrangement part 50b in which the motor 11 and the planetary gear mechanism 30 are to be arranged is hollowed out. To enable the housing of the planetary gear mechanism 30 and the arrangement of the pump 12 approximately orthogonal to axes of the motor 11 and the planetary gear mechanism 30, portions of both the circuit part 50a and the arrangement part 50b in the vicinity of an area where the pump 12 is disposed are formed with a larger width than other portions of the circuit part 50a and the arrangement part 50b in the direction perpendicular to the ECU mounting surface 51.

The closing valve 13 and the release valve 14 are assembled to the ECU mounting surface 51 of the circuit part 50a of the unit body 50 on which the ECU 40 is mounted in the direction approximately perpendicular to the ECU mounting surface 51. That is, pipes which extend from the master cylinder 2 and the wheel cylinder 5 and are connected to the first connection end A and the second connection end B respectively and the closing valve 13 and the release valve 14 are inserted into the unit body 50 such that the pipes and the valves 13, 14 are arranged approximately perpendicular to each other.

The motor 11 and the planetary gear mechanism 30 are arranged on the arrangement part 50b such that axes of the motor 11 and the planetary gear mechanism 30 extend along the ECU mounting surface 51 and the pipe connecting surface 52 of the circuit part 50a. Since the area of the arrangement part 50b where the motor 11 and the planetary gear mechanism 30 are arranged is hollowed, the motor 11 and the planetary gear mechanism 30 and the hydraulic circuit 1 have the positional relationship where the motor 11 and the planetary gear mechanism 30 and the hydraulic circuit 1 are arranged adjacent to each other.

The motor 11 and the planetary gear mechanism 30, and the hydraulic circuit 1 are functionally connected to each other by way of the pump 12 mounted on an end portion of the unit body 50. That is, a drive force of the motor 11 drives an eccentric cam 18 arranged on an arrangement part 50b side after a rotational speed is decelerated by the planetary gear mechanism 30. One end of the eccentric cam 18 is supported by the planetary gear mechanism 30, and the other end of the eccentric cam 18 is supported by the unit body 50 by way of a bearing 19. The eccentric cam 18 is configured such that a needle bearing 20 is mounted on a shaft of the eccentric cam 18 and hence, the eccentric cam 18 can smoothly transmit a piston action to the pump 12. The eccentric cam 18 is rotated and transmits the piston action to the pump 12 so that the pump 12 discharges a brake fluid to the fifth pipe 25 of the hydraulic circuit 1 by moving the piston in a reciprocating manner. The pump 12 is operated by the eccentric cam 18 and hence, the pump 12 is arranged on one end of the circuit part 50a in the longitudinal direction.

A connection terminal 11a for connection with the ECU 40 is mounted on an end portion of the motor 11. All of the connection terminal 11a, the closing valve 13, and the release valve 14 extend approximately perpendicular to the ECU mounting surface, and are electrically connected to the printed circuit board 43 of the ECU 40 when the ECU 40 is mounted on the ECU mounting surface 51.

The ECU 40 includes: the printed circuit board 43; the case 42 for housing the printed circuit board 43; a lid 44; and connection terminals 46, 47 mounted on the printed circuit board 43.

A CPU, a memory and the like are mounted on the printed circuit board 43, and the printed circuit board 43 controls the ABS hydraulic unit 100. The printed circuit board 45 has a connector 45. Accordingly, by connecting the connector 45 to a connector on a vehicle body side of a motorcycle on which the ABS hydraulic unit 100 is mounted (not shown in the drawing), various information such as a wheel speed can be transmitted between the ECU 40 and the vehicle body side.

The case 42 is configured such that the case 42 is closed by the lid 44 after the printed circuit board 43 is arranged in the case 42. A connecting portion 42a is formed on an end portion of the case 42 on a pump 12 side where the connector 45 of the printed circuit board 43 is exposed. A motor cover 42b having a circular shape which covers an end portion of the motor 11 is formed on an end portion of the case 42 on a motor 11 side.

Connection terminals 46, 47 are mounted on the printed circuit board 43. The connection terminal 46 is connected to the closing valve 13, and the connection terminal 47 is connected to the release valve 14. Due to such a constitution, the printed circuit board 43 can control opening/closing of the closing valve 13 and the release valve 14 by energizing or deenergizing the closing valve 13 and the release valve 14 via the connection terminals 46, 47.

The motor 11 is arranged between the ECU 40 and the unit body 50 in a state where the motor 11 is covered by the case 42. As shown in Fig. 6, the motor 11 is fixed to the bracket 37 mounted on the unit body 50 by bolts 38, 38 in the vicinity of the pump 12. An output shaft 11b of the motor 11 is connected to the planetary gear mechanism 30 on a side opposite to the bracket 37.

As shown in Fig. 7, the planetary gear mechanism 30 which is connected between the motor 11 and the eccentric cam 18 includes: an inner gear 31, a planetary carrier 32; a sun gear 33; and a planetary gear 34.

A rotation stopper 31a is formed on the inner gear 31, and the rotation stopper 31a is fixed to the unit body 50 (see Fig. 5) in the vicinity of the pump 12 (see Fig. 5). The inner gear 31 is formed in a ring shape, and teeth are formed on and along an inner peripheral surface of the inner gear 31.

The planetary carrier 32 is formed in a disk shape by combining a first planetary carrier 32a and a second planetary carrier 32b, and is arranged in the inside of the inner gear 31. The first planetary carrier 32a and the second planetary carrier 32b are combined such that these carriers are not rotatable relative to each other. That is, the first planetary carrier 32a and the second planetary carrier 32b are configured to be rotated integrally. In the inside of the planetary carrier 32, three gear shafts 35 are mounted in a state where the gear shafts 35 extend between the first planetary carrier 32a and the second planetary carrier 32b. A pair of gear holding portions 36a, 36b is mounted on each one of these gear shafts 35 in a state where the gear holding portions 36a, 36b are rotatable about an axis of the gear shaft 35. The planetary gears 34 are mounted between one such pair of gear holding portions 36a, 36b. These three planetary gears 34 are mounted on the planetary carrier 32 at intervals of approximately 120 degrees about the axis. Some teeth of respective planetary gears 34 project from an outer periphery of the planetary carrier 32 in a state where the planetary gears 34 are mounted on the planetary carrier 32. Due to such a constitution, in a state where the planetary carrier 32 is assembled into the inside of the inner gear 31, three planetary gears 34 are brought into a state where three planetary gears 34 constantly mesh with the teeth formed on and along the inner peripheral surface of the inner gear 31.

On the planetary carrier 32, the sun gear 33 is arranged at the center of three planetary gears 34. In a state where the sun gear 33 is assembled into the planetary carrier 32, the sun gear 33 is brought into a state where the sun gear 33 constantly meshes with three planetary gears 34.

A hole is formed in the first planetary carrier 32a in the vicinity of the axis of the first planetary carrier 32a, the output shaft 11b of the motor 11 extends in the inside of the planetary carrier 32 by passing through such a hole, and the sun gear 33 is assembled to the output shaft 11b of the motor 11. The sun gear 33 is mounted on the outer shaft 11b such that the sun gear 33 is not rotatable relative to the output shaft 11b. That is, the sun gear 33 and the output shaft 11b are configured to be rotated integrally.

On the other hand, a hole is formed in the second planetary carrier in the vicinity of an axis of the second planetary carrier, and teeth are formed on and along an inner peripheral surface of the hole. Due to such a constitution, the eccentric cam 18 assembled into the second planetary carrier such that teeth of the eccentric cam 18 mesh with the teeth formed in the hole is configured to be rotated integrally with the planetary carrier 32.

Due to the above mentioned constitution, in the planetary gear mechanism 30, when the sun gear 33 assembled to the output shaft 11 is rotated by a drive force of the motor 11, three planetary gears 34 which mesh with the sun gear 33 are respectively rotated about the gear shaft 35 in the direction opposite to the rotating direction of the sun gear 33. Since three planetary gears 34 also mesh with the inner gear 31, three planetary gears 34 are moved along the inner peripheral surface of the inner gear 31 along with the rotation of the planetary gears 34. At this stage of operation, three planetary gears 34 are moved while being rotated in the inside of the inner gear 31 in the same direction as the rotating direction of the sun gear 33. Since three planetary gears 34 are assembled into the planetary carrier 32, the planetary carrier 32 is moved while being rotated in the inside of the inner gear 31 integrally with three planetary gears 34. Due to such operations, the eccentric cam 18 which is integrally rotated with the planetary carrier 32 is rotated in the same direction as the sun gear 33. In the planetary gear mechanism 30 according to this embodiment, a speed reduction rate is set such that an output is outputted from the eccentric cam 18 with a rotational speed which is approximately 1/5 of a rotational speed of the output shaft 11b of the motor 11, and the output is outputted from the eccentric cam 18 with a torque which is approximately 5 times larger than a torque of the output shaft 11b of the motor 11b. That is, for example, when the motor 11 is rotated at 15000rpm (rotation per minute), the output shaft 11b is rotated at 3000rpm, while when the motor 11 is rotated at 20000rpm, the output shaft 11b is rotated at 4000rpm. The torque which is 10N·cm at the output shaft 11b of the motor 11 becomes 50N·cm at the eccentric cam 18. The motor 11 operates the pump 12 by way of the planetary gear mechanism 30.

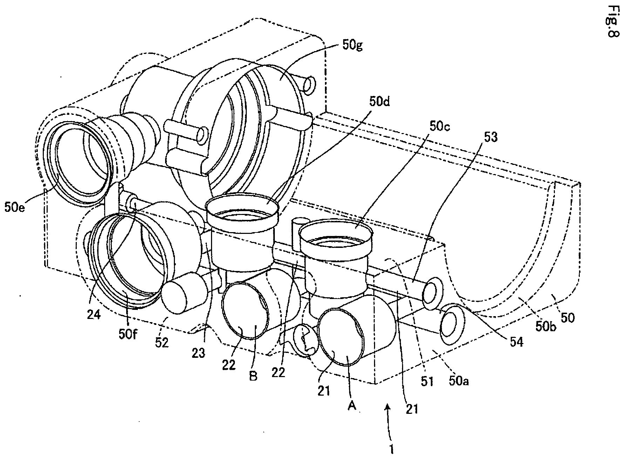

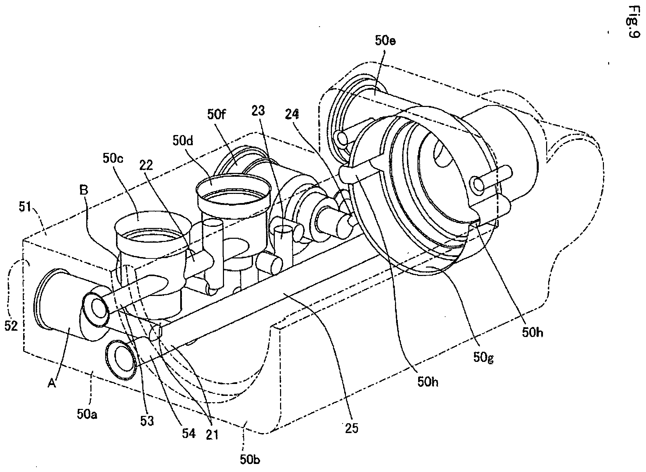

Fig. 8 is a perspective view as viewed from a pipe connecting surface side where the unit body is schematically described, and Fig. 9 is a perspective view as viewed from a back surface side of the pipe connecting surface where the unit body is schematically described. In Fig. 8 and Fig. 9, to facilitate the understanding of the invention, the hydraulic circuit 1 formed in the inside of the unit body 50 is made visible.

As shown in Fig. 8, the unit body 50 is configured such that, in an ECU mounting surface 51 of the circuit part 50a, a hole 50c for assembling the closing valve 13 (see Fig. 5) from the pump 12(see Fig. 5) side and a hole 50d for assembling the release valve 14 (see Fig. 5) from a pump 12 side are formed. These holes formed in the ECU mounting surface 51 are formed approximately perpendicular to the ECU mounting surface 51 and hence, the closing valve 13 and release valve 14 are configured to be assembled to the circuit part 51a approximately orthogonal to the axis direction of the motor 11.

On the other hand, the unit body 50 is also configured such that, in the pipe connecting surface 52 of the circuit part 50a, in order from a pump 12 (See Fig. 5) side, a hole 50e for assembling the pump 12, a hole 50f into which the accumulator 15 is assembled, a hole which constitutes the second connection end B, and a hole which constitutes the first connection end A are formed. These holes formed in the pipe connecting surface 52 are formed approximately perpendicular to the pipe connecting surface 52.

Further, as shown in Fig. 9, the unit body 50 is also configured such that, in a surface which is approximately orthogonal to the ECU mounting surface 51 and the pipe connecting surface 52, a first horizontal hole (suction side passage) 53 and a second horizontal hole (discharge side passage) 54 are formed. These first horizontal hole 53 and second horizontal hole 54 are formed along the ECU mounting surface 51 and the pipe connecting surface 52, that is, along the longitudinal direction of the circuit part 50a. The first horizontal hole 53 and second horizontal hole 54 are formed straight approximately parallel to the axis of the motor 11.

The first horizontal hole 53 connects a suction side of the pump 12 and the closing valve 13 along the second horizontal hole 54, and in order from the pump 12 arranged at one end of the circuit part 50a in the longitudinal direction to the other end of the circuit part 50a in the longitudinal direction, the accumulator 15, the release valve 14, the second connection end B, and the closing valve 13 are arranged. The first horizontal hole 53 is formed so as to penetrate the hole 50c in which the closing valve 13 is assembled, the hole at the second connection end B and the hole 50d in which the release valve 14 is assembled in that order. The first horizontal hole 53 is a second pipe 22 of the hydraulic circuit 1 (see Fig. 1). The hole 50f into which the accumulator 15 is assembled and the hole 50e into which the pump 12 is assembled are communicated with each other by holes formed from a pipe connecting surface 52 side and a back surface side of the ECU mounting surface 51 or the like thus forming a third pipe 23 and a fourth pipe 24 (see Fig. 1).

On the other hand, the second horizontal hole 54 is formed with a diameter larger than a diameter of the first horizontal hole 53, and is formed so as to be communicated with the hole into which the pump 12 is assembled and the hole at the first connection end A. The second horizontal hole 54 constitutes the first pipe 21 and the fifth pipe 25 of the hydraulic circuit 1 (see Fig. 1). The hole at the first connection end A and the hole 50c into which the closing valve 13 is assembled have deep portions thereof respectively connected to the second horizontal hole 54, while the first pipe 21 is formed as a pipe which is connected to the hole 50c from the hole at the first connection end A through the second horizontal hole 54. These holes are formed by embedding portions which are not necessary for forming the holes after boring.

In the unit body 50, a hole 50g for storing the eccentric cam 18, the bearing 19 and the planetary gear mechanism 30 is formed in the arrangement part 50b. A pair of recessed portions 50h is formed in the hole 50g, and the rotation stopper 31a of the inner gear 31 is fitted into the pair of recessed portions 50h.

In this embodiment, the ABS hydraulic unit 100 is configured such that the pump 12 is provided at one end of the circuit part 50a in the longitudinal direction, the first connection end A is formed on the other end of the circuit part 50a in the longitudinal direction, the first horizontal hole 53 is formed along the second horizontal hole 54, and in order from one end to the other end of the circuit part 50a in the longitudinal direction, the accumulator 15, the release valve14, the second connection end B and the closing valve 13 are arranged. Due to such a constitution, it is unnecessary to route a pipe around a long distance for connecting parts such as an accumulator and hence, a pipe length in the circuit part 50a can be shortened. As a result, the ABS hydraulic unit 100 can reduce a use amount of a brake fluid, can realize space saving and the reduction of weight by making the circuit part 50a small.

In this embodiment, the first horizontal hole 53 is formed along the second horizontal hole 54. Due to such a constitution, the first horizontal hole 53 and the second horizontal hole 54 can be formed from the same direction by boring and hence, working in manufacturing steps can be performed easily.

In this embodiment, in the ABS hydraulic unit 100, the pump 12 is provided at one end of the circuit part 50a in the longitudinal direction, and the circuit part 50a is connected to the master cylinder 2 at the other end in the longitudinal direction by means of the connection end A. Due to such a constitution, a discharge side of the pump 12 and the first connection end A are spaced apart from each other with a long distance therebetween. Accordingly, pulsations which are generated by operating the pump 12 and are transmitted to the first connection end A can be reduced and hence, a kickback which may be caused by pulsations transmitted to a user through the brake lever 3 can be lowered.

In this embodiment, in the ABS hydraulic unit 100, the second horizontal hole 54 is formed with a diameter larger than a diameter of the first horizontal hole 53. Also due to such a constitution, pulsations generated by operating the pump 12 can be reduced.

In the ABS hydraulic unit 100, the first horizontal hole 53 and the second horizontal hole 54 are formed approximately parallel to the axis of the motor 11, and the first connection end A, the second connection end B and the accumulator 15 are provided on the same plane. Due to such a constitution, at the time of forming, by boring, the first horizontal hole 53, the second horizontal hole 54, and the hole 50g in which the eccentric cam 18, the bearing 19 and the planetary gear mechanism 30 are stored or the hole 50f in which the first connection end A, the second connection end B and the accumulator 15 are stored in the unit body 50, it is sufficient to move a drill parallel to the axis of the motor 11 and hence, holes can be formed in the same direction. Accordingly, a working time for boring can be reduced, the number of jigs used for working can be reduced, and the number of times that the direction of the drill is to be changed can be reduced and hence, the deviation of the drill is generated minimally whereby working accuracy can be enhanced.

Although the invention has been explained based on the embodiment, the invention is not limited to the embodiment. For example, in this embodiment, also a motorcycle which performs an antilock brake control only on a front wheel is used. However, the invention is not limited to such a case. The invention is may be applicable to a motorcycle which performs an antilock brake control also on a rear wheel of the motorcycle. In this case, in the ABS hydraulic unit, the hydraulic circuits are arranged in symmetry with respect to the axis of the motor, and a pump for a front wheel side and a pump for a rear wheel side may be operated by one motor.

### Reference Signs List

- 1:: hydraulic circuit
- 2:: master cylinder
- 3:: brake lever
- 4:: reservoir
- 5:: wheel cylinder
- 6:: brake caliper (hydraulic brake)
- 11:: motor
- 11a:: connection terminal
- 11b:: output shaft
- 12:: pump
- 13:: closing valve
- 14:: release valve
- 15:: accumulator
- 17:: check valve
- 18:: eccentric cam
- 19:: bearing
- 20:: needle bearing
- 21:: first pipe
- 22:: second pipe
- 23:: third pipe
- 24:: fourth pipe
- 25:: fifth pipe
- 30:: planetary gear mechanism
- 31:: inner gear
- 31a:: rotation stopper
- 32:: planetary carrier
- 33:: sun gear
- 34:: planetary gear
- 35:: gear shaft
- 36a:: gear holding part
- 36b:: gear holding part
- 37:: bracket
- 38:: bolt
- 40:: ECU
- 42:: case
- 42a:: connecting portion
- 42b:: motor cover
- 43:: printed circuit board
- 44:: lid
- 45:: connector
- 46:: connection terminal
- 47:: connection terminal
- 50:: unit body
- 50a:: circuit part
- 50b:: arrangement part
- 51:: ECU mounting surface
- 52:: pipe connecting surface
- 53:: first horizontal hole (suction side passage)
- 54:: second horizontal hole (discharge side passage)
- 100:: ABS hydraulic unit
- A:: first connection end
- B:: second connection end

## Claims

1. An ABS hydraulic unit (100) where a hydraulic circuit (1) is connected to a master cylinder (2) for discharging a brake fluid at a first connection end (A) thereof and is connected to a hydraulic brake (5,6) at a second connection end (B) thereof, and makes the hydraulic brake perform braking, a pump (12) operated by a motor (11) having an axis defining an axial direction of the motor (11), an inlet valve (13), an outlet valve (14) and an accumulator (15) are provided in the hydraulic circuit (1), wherein the inlet valve (13) is connected to the first connection end (A) through a first pipe (21), and an antilock brake control of the hydraulic brake is performed by controlling the pump (12), the inlet valve (13) and the outlet valve (14), wherein the ABS hydraulic unit (100) has a circuit part (50a) in which the hydraulic circuit (1) is disposed, the circuit part (50a) includes:
the pump (12) which is disposed at one end of a longitudinal direction of the circuit part (50a) and,
the first connection end (A) which is formed at the other end of the longitudinal direction and,
a discharge side passage (54) which connects the discharge side of the pump (12) and the first connection end (A) and, a suction side passage (53) which extends along the discharge side passage (54) and connects a suction side of the pump (12) and the inlet valve (13), and
the accumulator (15), the outlet valve (14), the second connection end (B) and the inlet valve (13) are arranged in the suction side passage (53) in order from the one end to the other end.

2. The ABS hydraulic unit (100) according to claim 1, wherein the longitudinal direction is the axial direction of the motor (11).

3. The ABS hydraulic unit (100) according to claim 1 or 2, wherein the circuit part (50a) is configured such that the discharge side passage (54) and the suction side passage (53) are formed approximately parallel to the axial direction of the motor (11).

4. The ABS hydraulic unit (100) according to any one of claims 1 to 3, wherein the circuit part (50a) is configured such that the discharge side passage (54) has a larger diameter than the suction side passage (53).

5. The ABS hydraulic unit (100) according to any one of claims 1 to 4, wherein the circuit part (50a) is configured such that the first connection end (A), the second connection end (B) and the accumulator (15) are disposed on the same plane.

6. The ABS hydraulic unit (100) according to any one of claims 1 to 5, wherein a direction along which the inlet valve (13) and the outlet valve (14) are incorporated into the circuit part (50a) and the axial direction of the motor (11) are set approximately orthogonal to each other.

7. The ABS hydraulic unit (100) according to any one of claims 1 to 6, wherein the motor (11) is configured to operate the pump (12) by way of a planetary gear mechanism (30).

## Patentansprüche

1. ABS-Hydraulikeinheit (100), bei der ein Hydraulikkreislauf (1) mit einem Hauptzylinder (2) zur Abgabe einer Bremsflüssigkeit an einem ersten Verbindungsende (A) davon verbunden ist, und an einem zweiten Verbindungsende (B) davon mit einer Hydraulikbremse (5, 6) verbunden ist,
und die Hydraulikbremse einen Bremsvorgang ausführen lässt, wobei eine durch einen Motor (11) mit einer Achse, die eine Axialrichtung des Motors (11) definiert, betriebene Pumpe (12), ein Einlassventil (13), ein Auslassventil (14) und ein Akkumulator (15) im Hydraulikkreislauf (1) bereitgestellt werden, wobei das Einlassventil (13) mit dem ersten Verbindungsende (A) durch ein erstes Rohr (21) verbunden ist, und eine ABS-Regelung der Hydraulikbremse über eine Steuerung der Pumpe (12), des Einlassventils (13) und des Auslassventils (14) erfolgt, wobei die ABS-Hydraulikeinheit (100) ein Kreislaufelement (50a) aufweist, in dem der Hydraulikkreislauf (1) angeordnet ist, wobei das Kreislaufelement (50a) Folgendes umfasst:
die Pumpe (12), die an einem Ende einer Längsrichtung des Kreislaufelements (50a) angeordnet ist, und
das erste Verbindungsende (A), das an dem anderen Ende der Längsrichtung gebildet ist, und
einen Austrittsseitenkanal (54), der den Austrittsseitenkanal der Pumpe (12) und das erste Verbindungsende (A) miteinander verbindet, und einen Ansaugseitenkanal (53), der entlang des Austrittsseitenkanals (54) verläuft und eine Ansaugseite der Pumpe (12) und das Einlassventil (13) miteinander verbindet, und
wobei der Akkumulator (15), das Auslassventil (14), das zweite Verbindungsende (B) und das Einlassventil (13) im Ansaugseitenkanal (53) in dieser Reihenfolge von einem Ende zum anderen Ende angeordnet sind.

2. ABS-Hydraulikeinheit (100) nach Anspruch 1, wobei die Längsrichtung die Axialrichtung des Motors (11) ist.

3. ABS-Hydraulikeinheit (100) nach Anspruch 1 oder 2, wobei das Kreislaufelement (50a) so konfiguriert ist, dass der Austrittsseitenkanal (54) und der Ansaugseitenkanal (53) ungefähr parallel zu der Axialrichtung des Motors (11) ausgebildet sind.

4. ABS-Hydraulikeinheit (100) nach einem der Ansprüche 1 bis 3, wobei das Kreislaufelement (50a) so konfiguriert ist, dass der Austrittsseitenkanal (54) einen größeren Durchmesser aufweist als der Ansaugseitenkanal (53).

5. ABS-Hydraulikeinheit (100) nach einem der Ansprüche 1 bis 4, wobei das Kreislaufelement (50a) so konfiguriert ist, dass das erste Verbindungsende (A), das zweite Verbindungsende (B) und der Akkumulator (15) auf der gleichen Ebene angeordnet sind.

6. ABS-Hydraulikeinheit (100) nach einem der Ansprüche 1 bis 5, wobei eine Richtung, entlang derer das Einlassventil (13) und das Auslassventil (14) in das Kreislaufelement (50a) eingegliedert sind, und die Axialrichtung des Motors (11) ungefähr lotrecht zueinander ausgerichtet sind.

7. ABS-Hydraulikeinheit (100) nach einem der Ansprüche 1 bis 6, wobei der Motor (11) so konfiguriert ist, dass die Pumpe (12) durch einen Planetengetriebemechanismus (30) angetrieben wird.

## Revendications

1. Unité hydraulique d'ABS (100) où un circuit hydraulique (1) est raccordé à un maître-cylindre (2) pour déverser un liquide de frein au niveau d'une première extrémité (A) de branchement du circuit et est raccordé à un frein hydraulique (5, 6) au niveau d'une seconde extrémité (B) de branchement du circuit, et il amène le frein hydraulique à effectuer un freinage, une pompe (12) actionné par un moteur électrique (11) comportant un axe définissant une direction axiale du moteur (11), une valve d'admission (13), une valve de sortie (14) et un accumulateur (15) se trouvent dans le circuit hydraulique (1), dans laquelle la valve d'admission (13) est raccordée à la première extrémité (A) de branchement par un premier tuyau (21), et on effectue une commande de freinage antiblocage en commandant la pompe (12), la valve d'admission (13) et la valve de sortie (14), dans laquelle l'unité hydraulique d'ABS (100) comporte une pièce (50a) de circuit dans laquelle est disposé le circuit hydraulique (1), la pièce (50a) de circuit comprenant :
la pompe (12) qui est disposée à une extrémité dans le sens longitudinal de la pièce (50a) de circuit, et
la première extrémité (A) de branchement qui est constituée à l'autre extrémité dans le sens longitudinal, et
un passage (54) de côté refoulement qui raccorde le côté refoulement de la pompe (12) et la première extrémité (A) de branchement, et
un passage (53) de côté aspiration qui s'étend le long du passage (54) de côté refoulement et qui raccorde le côté aspiration de la pompe (12) et la valve d'admission (13), et
l'accumulateur (15), la valve de sortie (14), la seconde extrémité (B) de branchement et la valve d'admission (13) sont disposés dans le passage (53) de côté aspiration dans cet ordre d'une extrémité à l'autre.

2. Unité hydraulique d'ABS (100) selon la revendication 1, dans laquelle la direction longitudinale est la direction axiale du moteur (11).

3. Unité hydraulique d'ABS (100) selon la revendication 1 ou 2, dans laquelle la pièce (50a) de circuit est configurée de telle sorte que le passage (54) de côté refoulement et le passage (53) de côté aspiration sont constitués à peu près parallèles à la direction axiale du moteur (11).

4. Unité hydraulique d'ABS (100) selon l'une quelconque des revendications 1 à 3, dans laquelle la pièce (50a) de circuit est configurée de telle sorte que le passage (54) de côté refoulement a un plus grand diamètre que le passage (53) de côté aspiration.

5. Unité hydraulique d'ABS (100) selon l'une quelconque des revendications 1 à 4, dans laquelle la pièce (50a) de circuit est configurée de telle sorte que la première extrémité (A) de branchement, la seconde extrémité (B) de branchement et l'accumulateur (15) sont disposés dans le même plan.

6. Unité hydraulique d'ABS (100) selon l'une quelconque des revendications 1 à 5, dans laquelle la direction suivant laquelle la valve d'admission (13) et la valve de sortie (14) sont intégrées dans la pièce (50a) de circuit et la direction axiale du moteur (11) sont fixées à peu près perpendiculaires l'une à l'autre.

7. Unité hydraulique d'ABS (100) selon l'une quelconque des revendications 1 à 6, dans laquelle le moteur (11) est configuré pour faire fonctionner la pompe (12) au moyen d'un train planétaire (30).
